(19) Europäisches Patentamt
European Patent Office
Office européen des brevets

(11) **EP 3 034 481 B1**

(12) **EUROPEAN PATENT SPECIFICATION**

(45) Date of publication and mention of the grant of the patent:
**05.02.2020 Bulletin 2020/06**

(21) Application number: **14836672.7**

(22) Date of filing: **08.08.2014**

(51) Int Cl.:
***C04B 24/42*** *(2006.01)* ***C04B 28/06*** *(2006.01)*
*C04B 111/20* *(2006.01)* *C04B 111/23* *(2006.01)*

(86) International application number:
**PCT/JP2014/071106**

(87) International publication number:
**WO 2015/022921 (19.02.2015 Gazette 2015/07)**

# (54) AQUEOUS RESIN DISPERSION FOR MORTAR, MORTAR COMPOSITION AND HARDENED MORTAR PRODUCT

WÄSSRIGE HARZDISPERSION FÜR MÖRTEL, MÖRTELZUSAMMENSETZUNG UND GEHÄRTETES MÖRTELPRODUKT

DISPERSION DE RÉSINE AQUEUSE POUR MORTIER, COMPOSITION DE MORTIER ET PRODUIT DURCI DE MORTIER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.08.2013 JP 2013169238**

(43) Date of publication of application:
**22.06.2016 Bulletin 2016/25**

(73) Proprietor: **Asahi Kasei Kabushiki Kaisha**
**Tokyo 100-0006 (JP)**

(72) Inventors:
- **KAMIYAMA, Yasuyuki**
  **Tokyo 101-8101 (JP)**
- **IGARASHI, Yoshimitsu**
  **Tokyo 101-8101 (JP)**
- **NGUYEN, Ba Tuyet Nga**
  **Tokyo 101-8101 (JP)**

(74) Representative: **Strehl Schübel-Hopf & Partner**
**Maximilianstrasse 54**
**80538 München (DE)**

(56) References cited:
**EP-A2- 0 565 987**
**DE-A1-102008 055 064**
**JP-A- H0 648 795**
**JP-A- H06 199 558**
**JP-A- 2000 273 305**
**JP-A- 2000 336 232**
**JP-A- 2007 204 333**
**JP-A- 2007 204 333**
**JP-A- 2008 174 641**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 034 481 B1

## Description

Technical Field

The present invention relates to an aqueous resin dispersion for mortar that improves the sulfuric acid resistance of mortar, a mortar composition and a mortar hardened product.

Background Art

In sewage facilities, microorganisms present on the concrete surface of the gas phase part produce sulfuric acid from hydrogen sulfide derived from sewage water, which causes a problem of the corrosion of concrete, to which an alkaline material has been applied, due to the sulfuric acid. Currently, as countermeasures against this problem, an anticorrosion coating method has been employed in which concrete is prevented from being contacted with sulfuric acid by using an organic resin. In addition to such method, it is expected that, if sulfuric acid resistance could be imparted to concrete or mortar for cross sectional restoration itself, it would be possible to enhance the durability of a concrete structure and in some cases to omit an anticorrosion coating.
In order to enhance the performance of mortar, a method is proposed in which an organic polymer (an aqueous resin dispersion such as a latex, a powder dispersion, etc.) is mixed in the mortar.
Further, in order to enhance the flexural strength, compression strength and adhesion strength of mortar, Patent Literature 1, Patent Literature 2 and Patent Literature 3 propose an admixture for a cementitious base material obtained by polymerizing a polymerizable monomer mixture containing an alkoxysilane group-containing polymerizable monomer, an aqueous resin dispersion and an emulsion for cement mortar. Furthermore, in order to enhance the flexural strength, compression strength, water resistance, weatherability and the adhesiveness to concrete, a reinforcing rod or the like of a cement-based composition, Patent Literature 4 proposes a copolymer latex obtained by making a copolymer latex obtained through emulsion polymerization absorb an alkoxysilane compound, and then allowing the condensation reaction of the alkoxysilane compound to proceed.

Citation List

Patent Literature

Patent Literature 1: Japanese Patent Laid-Open No. 8-91900
Patent Literature 2: Japanese Patent Laid-Open No. 2008-174641
Patent Literature 3: Japanese Patent Laid-Open No. 2007-204333
Patent Literature 4: Japanese Patent Laid-Open No. 3-279244

JP 2000336232 A discloses a resin composition comprising an acrylic monomer, an alkoxy-silane group containing monomer, a nonionic surfactant and having a glass transition temperature of -30°C to 70 °C.
EP 0 565 987 A2 discloses resin composition for cementitious compositions comprising a polymer having a glass transition temperature of 23 °C or higher.

Summary of Invention

Technical Problem

Here, in the case that an acrylic polymer is used singly, although the sulfuric acid resistance is improved compared to the case that it is not used, the amount of an organic polymer in the mortar is as small as 10% by mass based on the amount of cement, and therefore, the influence on sulfuric acid resistance is assumed to be small. Accordingly, there exists no report that an organic polymer particularly enhances the sulfuric acid resistance of mortar, and investigations on mortar have been made primarily in terms of the formulation ratio of an inorganic material such as cement, construction thickness or the like. As for the techniques described in Patent Literature 1, Patent Literature 2 and Patent Literature 3 and Patent Literature 4, they aim at enhancing the flexural strength, compression strength and adhesion strength, and hence the sulfuric acid resistance is not investigated therein. However, it is expected that, if a mortar with an organic polymer mixed therein could exert excellent sulfuric acid resistance, the durability of a concrete structure would be enhanced.
The present invention has been made considering the above problems inherent in conventional techniques,

and it is the object of the present invention to provide an aqueous resin dispersion for mortar, a composition and a hardened product, which can exhibit excellent sulfuric acid resistance and adhesiveness.

Solution to Problem

The present inventors have intensively studied to solve the above problems, and as a result found that an aqueous resin dispersion obtained by polymerizing a polymerizable monomer mixture containing an alkoxysilane group-containing polymerizable monomer and a carboxylic acid group-containing polymerizable monomer significantly improves the sulfuric acid resistance of mortar, and consequently completed the present invention.

That is, the present invention is as follows.

[1] An aqueous resin dispersion for mortar, comprising:

a polymer (A) obtained by polymerizing 0.1 % by mass or more and 5.0% by mass or less of an alkoxysilane group-containing polymerizable monomer (a), 0.5% by mass or more and 3.0% by mass or less of a carboxylic acid group-containing polymerizable monomer (b) and an other polymerizable monomer (c) to be copolymerized with the component (a) and the component (b), the polymer (A) having a calculated glass transition temperature of -20°C or higher and 20°C or lower; and
a nonionic surfactant,
wherein the component (A) is a polymer modified with a compound represented by the following formula (1):

$$(R^1)_n\text{-Si-}(R^2)_{(4-n)} \qquad (1)$$

(wherein n is an integer of 0 or more and 3 or less; $R^1$ represents hydrogen, an alkyl group having 1 or more and 16 or less carbon atoms, an aryl group having 6 or more and 10 or less carbon atoms or a cycloalkyl group having 5 or more and 6 or less carbon atoms; a number n of $R^1$ may be the same or different; $R^2$ represents an alkoxy group having 1 or more and 8 or less carbon atoms, an acetoxy group or a hydroxy group; and a number (4 - n) of $R^2$ may be the same or different.)

[2] The aqueous resin dispersion for mortar according to [1], wherein in the formula (1), n is an integer of 1 or more and 3 or less.

[3] Use of the aqueous resin dispersion for mortar according to [1] or [2] for modifying the sulfuric acid resistance of cement.

[4] A composition comprising the aqueous resin dispersion for mortar according to [1] or [2] and a cement.

[5] The composition according to [4] further comprising a filler and an additive.

[6] The composition according to [4] or [5], wherein the cement is an alumina cement.

[7] A method for producing a hardened product, comprising hardening the composition according to any of [4] to [6].

[8] A hardened product obtained by hardening the composition according to any of [4] to [6].

[9] A method for modifying sulfuric acid resistance of cement, the method comprising
mixing an aqueous resin according to [1] with a cement.

Advantageous Effects of Invention

The present invention can provide an aqueous resin dispersion for mortar, a composition and a hardened product, which can exhibit excellent sulfuric acid resistance and adhesiveness.

Description of Embodiments

Hereinafter, an embodiment to implement the present invention (hereinafter, simply referred to as "the present embodiment") is described in detail. The present embodiment in the following is an illustration to describe the present invention, and is not intended to limit the present invention to the following content. The present invention can be

implemented with an appropriate variation added thereto within the scope of the gist of the present invention.

The aqueous resin dispersion for mortar according to the present embodiment contains: a defined, modified polymer (A) obtained by polymerizing 0.1% by mass or more and 5.0% by mass or less of an alkoxysilane group-containing polymerizable monomer (a), 0.5% by mass or more and 3.0% by mass or less of a carboxylic acid group-containing polymerizable monomer (b) and an other polymerizable monomer (c) to be copolymerized with the component (a) and the component (b), the polymer (A) having a calculated glass transition temperature of -20°C or higher and 20°C or lower; and a nonionic surfactant. Due to this configuration, the aqueous resin dispersion for mortar according to the present embodiment can exhibit excellent sulfuric acid resistance and adhesiveness. It is to be noted that "mortar" in the present embodiment means a construction material made by kneading cement and sand (fine aggregate) with water. Meanwhile, "aqueous resin dispersion" in the present embodiment means one in which a resin is retained in a state of being dispersed in water. The aqueous resin dispersion is not particularly limited, and specific examples thereof include acrylic latexes, styrene-butadiene-based latexes, vinylidene chloride-based latexes, ethylene-vinyl acetate-based emulsions, silicone emulsions and urethane dispersions.

The alkoxysilane group-containing polymerizable monomer (a) in the present embodiment is not particularly limited, and examples thereof include vinyltrimethoxysilane, vinyltriethoxysilane, vinyl tris(β-methoxyethoxy)silane, vinylmethyldimethoxysilane, γ-methacryloxypropyltrimethoxysilane, γ-methacryioxypropylmethyldimethoxysilane, γ-methacryloxypropyltrimethoxysilane, γ-acryloxypropyltrimethoxysilane, γ-acryloxypropylmethyldimethoxysilane, γ-methacryloxypropyltriethoxysilane and γ-methacryloxypropylmethyldiethoxysilane. One of these may be used singly, or two or more thereof may be used in combination. Among them, γ-methacryloxypropyltrimethoxysilane, γ-methacryloxypropylmethyldimethoxysilane, γ-methacryloxypropyltriethoxysilane and γ-methacryloxypropylmethyldiethoxysilane are preferred. Among them, γ-methacryloxypropyltrimethoxysilane and γ-methacryloxypropyltriethoxysilane are more preferred. In addition, the fraction of the alkoxysilane group-containing polymerizable monomer (a) based on the total amount of the monomers to be used for polymerizing the component (A) is, from the viewpoint of polymerization stability and adhesiveness to inorganic matters, 0.1% by mass or more and 5.0% by mass or less, and preferably 0.1% by mass or more and 2.0% by mass or less.

The carboxylic acid group-containing polymerizable monomer (b) in the present embodiment is not particularly limited, and examples thereof include acrylic acid, methacrylic acid, crotonic acid, itaconic acid, maleic acid and maleic anhydride. One of these may be used singly, or two or more thereof may be used in combination. Among them, acrylic acid and methacrylic acid are preferred. The fraction of the carboxylic acid group-containing polymerizable monomer (b) based on the total amount of the monomers to be used for polymerizing the component (A) is 0.5% by mass or more and 3.0% by mass or less. A fraction of more than 3.0% by mass significantly lowers the sulfuric acid resistance of mortar. Meanwhile, a fraction of less than 0.5% by mass impairs the adhesiveness of mortar. That is, a fraction in the above range of 0.5% by mass or more and 3.0% by mass or less makes the sulfuric acid resistance and adhesiveness of mortar excellent. From the same viewpoint, the above fraction is preferably 0.5% by mass or more and 2.0% by mass or less.

The other polymerizable monomer (c) copolymerizable with the component (a) and the component (b) in the present embodiment is not particularly limited, and examples thereof include (meth)acrylates, hydroxy group-containing polymerizable monomers and polymerizable monomers other than these.

The (meth)acrylate in the present embodiment is not particularly limited, and specific examples thereof include (meth)acrylic acid alkyl esters containing an alkyl group having 1 to 18 carbon atoms, (poly)oxyethylene mono(meth)acrylates having 1 to 100 ethylene oxide groups, (poly)oxypropylene mono(meth)acrylates having 1 to 100 propylene oxide groups, (meth)acrylic acid hydroxyalkyl esters containing an alkyl group having 1 to 18 carbon atoms and (poly)oxyethylene di(meth)acrylates having 1 to 100 ethylene oxide groups.

The (meth)acrylic acid alkyl ester containing an alkyl group having 1 to 18 carbon atoms in the present embodiment is not particularly limited, and specific examples thereof include methyl (meth)acrylate, ethyl (meth)acrylate, n-butyl (meth)acrylate, isobutyl (meth)acrylate, tert-butyl (meth)acrylate, 2-ethylhexyl (meth)acrylate, dodecyl (meth)acrylate and cyclohexyl (meth)acrylate.

The hydroxy group-containing polymerizable monomer in the present embodiment is not particularly limited, and example thereof include 2-hydroxyethyl (meth)acrylate, 4-hydroxypropyl (meth)acrylate, 2-hydroxybutyl (meth)acrylate, caprolactone modified (meth)acrylate, polyethylene glycol (meth)acrylate and polypropylene glycol (meth)acrylate. One of these may be used singly, or two or more thereof may be used in combination. Among them, 2-hydroxyethyl (meth)acrylate is preferred.

Regarding the component (c) in the present embodiment, the polymerizable monomer other than above-described (meth)acrylates and hydroxy group-containing polymerizable monomers is not particularly limited as long as being a polymerizable monomer other than them and being polymerizable with the component (a) and the component (b). Specific examples thereof include aromatic monomers such as styrene and vinyltoluene; vinyl esters such as vinyl acetate, vinyl propionate and vinyl versatate; vinyl cyanides such as (meth)acrylonitrile; vinyl halides such as vinyl chloride and vinylidene chloride; olefins such as ethylene and butadiene. Further, examples of various functional monomers include (meth)acrylamide, vinylpyrrolidone, glycidyl (meth)acrylate, N-methylolacrylamide, N-butoxymethylacrylamide and divinylbenzene. As the component (c), one of the above-described substances may be used singly, or two or more thereof may be used in combination.

The aqueous resin dispersion for mortar according to the present embodiment has a calculated glass transition temperature of -20°C or higher and 20°C or lower. A calculated glass transition temperature higher than 20°C significantly impairs the sulfuric acid resistance. A calculated glass transition temperature lower than -20°C lowers the water resistance of mortar. In the present embodiment, "calculated glass transition temperature" is a temperature determined from the glass transition temperature of a homopolymer of a monomer and the copolymerization rate of a monomer by using the following formula. Here, the alkoxysilane group-containing polymerizable monomer (a) is not involved in calculation of a calculated Tg because it is cross-linkable and the amount thereof to be used is small. Values for Tg and W can be measured by using a method described in Examples bellow.

$$1/Tg = W1/Tg1 + W2/Tg2 + ...$$

(Tg: a calculated glass transition temperature (K) of a copolymer composed of monomers 1, 2...; W1, W2...: respective mass fractions of monomer 1, monomer 2... in the copolymer (W1 + W2 +... = 1); Tg1, Tg2...: respective glass transition temperatures (K) of a homopolymer of monomer 1, monomer 2...)

Tg (K) of a homopolymer used in the above formula is described in "Polymer Handbook" (Jhon Willey & Sons), for example. Numerical values used in the present embodiment are exemplified bellow. A value in parentheses represents Tg of a homopolymer. polystyrene (373K), polymethyl methacrylate (373K), polybutyl acrylate (228K), poly2-ethylhexyl acrylate (218K), polyacrylic acid (360K), polymethacrylic acid (417K), polyacrylonitrile (369K), poly2-hydroxyethyl acrylate (258K), poly2-hydroxyethyl methacrylate (328K).

The aqueous resin dispersion for mortar according to the present embodiment can be obtained by copolymerizing the component (a), the component (b) and the component (c). Although the type of copolymerization is not particularly limited, emulsion polymerization is preferred, and radical emulsion polymerization is more preferred. In the case of polymerizing by using emulsion polymerization or the like, it is preferred to use a surfactant.

The aqueous resin dispersion for mortar according to the present embodiment preferably contains a nonionic surfactant in an amount of 1.0 part by mass or more and 10.0 parts by mass or less, and more preferably 2.0 parts by mass or more and 5.0 parts by mass or less, based on 100 parts by mass of the polymer. In this range, the admixture stability with cement tends to be excellent and capable of sufficiently ensuring the water resistance of mortar.

The nonionic surfactant in the present embodiment is not particularly limited, and examples thereof include polyoxyethylene alkyl ethers, polyoxyethylene nonylphenyl ether, sorbitan fatty acid esters, polyoxyethylene fatty acid esters, polyoxyethylene-polyoxypropylene block copolymers and reactive nonionic surfactants having the above-described backbone and a polymerizable unsaturated double bond in the molecule.

The surfactant other than nonionic surfactants in the present embodiment is not particularly limited, and examples thereof include anionic surfactants, cationic surfactants, amphoteric surfactants and polymeric surfactants.

The anionic surfactant in the present embodiment is not particularly limited, and examples thereof include fatty acid salts such as sodium lauryl sulfate; higher alcohol sulfate salts; alkylbenzenesulfonate such as sodium dodecylbenzenesulfonate; polyoxyethylene alkyl ether sulfate, polyoxyethylene polycyclic phenyl ether sulfate, polyoxynonylphenyl ether sulfonate, polyoxyethylene-polyoxypropylene glycol ether sulfate and so-called reactive anionic surfactants having a sulfonic acid group or a sulfate group and a polymerizable unsaturated double bond in the molecule.

The cationic surfactant in the present embodiment is not particularly limited, and examples thereof include alkylamine salts and quaternary ammonium salts.

The amphoteric surfactant in the present embodiment is not particularly limited, and examples thereof include alkylbetaines and alkylamine oxides.

The polymeric surfactant in the present embodiment is not particularly limited, and examples thereof include (modified) polyvinyl alcohols.

One of the above various surfactants may be used singly, or two or more thereof may be used in combination.

The component (A) in the present embodiment is silicone-modified with an Si-containing compound from the viewpoint of enhancing the adhesiveness to inorganic matters. From the same viewpoint, the Si-containing compound to be used for modification is a compound represented by the following general formula (1):

$$(R^1)_n\text{-Si-}(R^2)_{(4-n)} \qquad (1)$$

(in the general formula (1), n is an integer of 0 or more and 3 or less; $R^1$ represents hydrogen, an alkyl group having 1 or more and 16 or less carbon atoms, an aryl group having 6 or more and 10 or less carbon atoms or a cycloalkyl group

having 5 or more and 6 or less carbon atoms; a number n of $R^1$ may be the same or different; $R^2$ represents an alkoxy group having 1 or more and 8 or less carbon atoms, an acetoxy group or a hydroxy group; and a number (4 - n) of $R^2$ may be the same or different.)

$R^1$ in the general formula (1) is preferably a methyl group or a phenyl group. Preferably, each $R^2$ is independently a methoxy group, an ethoxy group, a propoxy group, a butoxy group, a methoxyethoxy group or a hydroxy group.

In the present embodiment, n in the above formula (1) is preferably an integer of 1 or more and 3 or less from the viewpoint of the polymerization stability of the aqueous resin dispersion for mortar.

The Si-containing compound in the present embodiment more preferably contains at least one of a silane compound (I) in which n = 0 in the general formula (1) and a silane compound (II) in which n = 1 in the general formula (1), and still more preferably contains the silane compound (II) from the viewpoint of the polymerization stability in obtaining an aqueous dispersion of the component (A).

Preferably, each $R^2$ in the general formula (1) for the above silane compound (I) is independently a methoxy group, an ethoxy group, a propoxy group, a butoxy group, a methoxyethoxy group or a hydroxy group. Preferred specific examples of the silane compound (I) include tetramethoxysilane and tetraethoxysilane.

$R^1$ in the general formula (1) for the above silane compound (II) is preferably a methyl group or a phenyl group, and preferably, each $R^2$ is independently a methoxy group, an ethoxy group, a propoxy group, a butoxy group, a methoxyethoxy group or a hydroxy group. Preferred specific examples of the silane compound (II) include methyltrimethoxysilane, phenyltrimethoxysilane, methyltriethoxysilane, phenyltriethoxysilane and isobutyltrimethoxysilane.

When a coating film is formed using the aqueous resin dispersion for mortar according to the present embodiment, particularly in the case that flexibility is required for the coating film, at least one of a cyclic silane compound and a silane compound (III) in which n = 2 in the general formula (1) is preferably contained as the Si-containing compound. More preferably, at least one of a cyclic silane and the silane compound (III) is contained in combination with at least one of the silane compound (I) and the silane compound (II), and still more preferably, at least one of a cyclic silane compound and the silane compound (III) is contained in combination with the silane compound (II). In particular, using any one of a cyclic silane compound and the silane compound (III) in combination with the silane compound (II) tends to be capable of controlling the cross-linking density of the component (A), which is a polymer, to be lower, and as a result further enhancing the mechanical properties of a hardened product obtained by hardening a mortar composition containing the aqueous resin dispersion for mortar according to the present embodiment.

Specific examples of the cyclic silane compound in the present embodiment, without being particularly limited, include octamethylcyclotetrasiloxane, octaphenylcyclosiloxane, hexamethylcyclotrisiloxane and decamethylcyclopentasiloxane.

Specific examples of the silane compound (III), without being particularly limited, include dimethyldimethoxysilane, diphenyldimethoxysilane, dimethyldiethoxysilane, diphenyldiethoxysilane and methylphenyldimethoxysilane.

In addition, the Si-containing compound may further contain at least one selected from the group consisting of a linear siloxane having a hydrolyzable group, an alkoxysilane oligomer and a silane compound (IV) in which n = 3 in the general formula (1).

Specific examples of the linear siloxane having a hydrolyzable group in the present embodiment, without being particularly limited, include compounds represented by the following general formulae (i), (ii) and (iii).

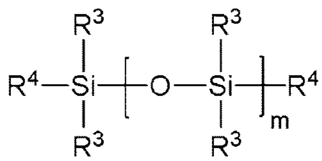

(i)

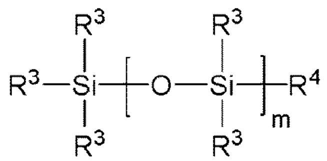

(ii)

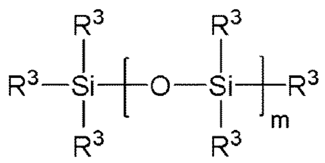

(iii)

In the general formulae (i) to (iii), each $R^3$ independently represents hydrogen, an alkyl group having 1 or more and 16 or less carbon atoms, an aryl group having 6 or more and 10 or less carbon atoms, a cycloalkyl group having 5 or more and 6 or less carbon atoms, an alkyl acrylate group having 1 or more and 10 or less carbon atoms or an alkyl methacrylate group having 1 or more and 10 or less carbon atoms; each $R^4$ independently represents an alkoxy group having 1 or more and 8 or less carbon atoms, an acetoxy group, a hydroxy group, an epoxy group, an alkylene oxide group or a polyalkylene oxide group; and m is an integer of 1 or more and 999 or less.

$R^1$ in the silane compound (IV) is not particularly limited, and preferably a methyl group or a phenyl group. $R^2$ in the silane compound (IV) is not particularly limited, and preferably a methoxy group, an ethoxy group, a propoxy group, a butoxy group, a methoxyethoxy group or a hydroxy group.

Preferred specific examples of the silane compound (IV) in the present embodiment include triphenylethoxysilane and trimethylmethoxysilane.

The Si-containing compound in the present embodiment may further contain an additional silane compound other than the above-described silane compounds, for example, a chlorosilane compound such as methylchlorosilane, methyldichlorosilane, dimethyldichlorosilane, trimethylchlorosilane, phenyltrichlorosilane and diphenylchlorosilane.

In the present embodiment, using an aqueous resin dispersion modified with the Si-containing compound tends to be capable of further improving the adhesiveness to inorganic matters. The presence of an aqueous resin dispersion modified with the Si-containing compound can be confirmed by using $^{29}$Si-NMR ($^{29}$Si nuclear magnetic resonance spectrum) and/or $^1$H-NMR (proton nuclear magnetic resonance spectrum). For example, in the case of a condensation product of the silane compound (II), a signal appears usually in the range of -40 to -80 ppm in the chemical shift of the $^{29}$Si-NMR.

In the present embodiment, the amount of the Si-containing compound is preferably 0.1 parts by mass or more and 10.0 parts by mass or less based on 100 parts by mass of the polymer (A). Falling within the above range tends to be capable of obtaining a more stable aqueous resin dispersion.

As the method for producing the component (A) in the present embodiment, an emulsion polymerization method can be suitably employed as described above. Although reaction conditions or the like for the emulsion polymerization are not particularly limited, examples of the preferred method include a method in which a polymerizable monomer is emulsion-polymerized in water in the presence of a surfactant and a polymerization initiator at a pH of 4 or lower usually at 60 to 90°C. In the emulsion polymerization method, for example, this emulsion polymerization step is performed once or repeated in multiple steps.

The polymerization method by emulsion polymerization in the present embodiment is not particularly limited, and examples thereof include a monomer-batch-charging method in which a monomer is charged in a batch; a monomer-dropping method in which a monomer is added dropwise continuously; a pre-emulsion method in which a monomer, water and an emulsifier are mixed to emulsify in advance and the resultant is added dropwise; and a combination method of these. The method for using a polymerization initiator is not particularly limited. For the above-described used Si-containing compound, examples of the method for using it to be employed include an emulsion polymerization method in which condensation reaction of a hydrolyzable silane and radical polymerization of an unsaturated monomer are allowed to proceed simultaneously, or condensation reaction of a hydrolyzable silane is allowed to proceed antecedently and thereafter radical polymerization of an unsaturated monomer is allowed to proceed; and a method in which radical polymerization of an unsaturated monomer is allowed to proceed and thereafter condensation reaction of a hydrolyzable silane is allowed to proceed.

The polymerization initiator in the present embodiment is not particularly limited, and a commonly used radical initiator can be employed. A radical polymerization initiator generates a radical by the action of heat, a reducing substance or the like to cause addition polymerization of a polymerizable monomer. The radical polymerization initiator is not particularly limited, and examples thereof include water-soluble or oil-soluble persulfates, peroxides and azobis compounds. Specific examples thereof include potassium persulfate, sodium persulfate, ammonium persulfate, hydrogen peroxide, tert-butyl hydroperoxide, tert-butyl peroxybenzoate, 2,2-azobisisobutyronitrile, 2,2-azobis(2-diaminopropane)hydrochloride and 2,2-azobis(2,4-dimethylvaleronitrile). Among them, water-soluble ones are preferred. In the case that the acceleration of polymerization rate or a reaction at a low temperature is further desired, it is preferred to use a reducing agent such as sodium bisulfite, ferrous chloride, ascorbic acid and a formaldehydesulfoxylate salt in combination with a radical polymerization initiator.

In emulsion polymerization in the present embodiment, a molecular-weight regulator can be used as necessary.

The molecular-weight regulator is not particularly limited, and examples thereof include dodecyl mercaptan and butyl mercaptan. The fraction of the molecular-weight regulator to be used is not particularly limited, and preferably 2% by mass or less based on the total amount of the monomers.

In the present embodiment, it is preferred to control the pH to the range of 5 to 10 after the above polymerization from the viewpoint of further enhancing the dispersion stability over a long period. Specifically, it is more preferred to use a basic substance, for example, a basic organic compound such as ammonia and an amine such as dimethylaminoethanol; or a basic inorganic compound such as an alkali metal salt such as sodium hydroxide and potassium hydroxide, after the polymerization to adjust the pH to the range of 5 to 10.

The hardening catalyst for film-forming which can be used after the completion of the emulsion polymerization in the present embodiment is not particularly limited, and examples thereof which can be added include metal salts of an organic acid such as dibutyltin dilaurate, dioctyltin dilaurate, dibutyltin diacetate, tin octylate, tin laurate, iron octylate, lead octylate and tetrabutyl titanate; and amine compounds such as n-hexylamine and 1,8-diazabicyclo[5.4.0]-7-undecene. In the case that the hardening catalyst is not water-soluble, it is preferred to emulsify before use thereof by using an emulsifier and water.

The aqueous resin dispersion for mortar according to the present embodiment may further contain, in addition to the above-described components, other additional component which is commonly added for formulation to an aqueous resin dispersion or the like within the range of the effect. Such additional component is not particularly limited, and examples thereof include a thickener, a film-forming aid, an antifreezing agent, an antifoaming agent, a dye and a preservative. One of these additional components may be used singly, or two or more thereof may be used in combination.

The thickener in the present embodiment is not particularly limited, and examples thereof include a polymeric dispersion stabilizer such as polyvinyl alcohol (including partially-saponified polyvinyl acetate), methyl cellulose, hydroxyethyl cellulose and polyvinylpyrrolidone; and other polyether-based or polycarboxylic acid-based thickeners.

The film-forming aid in the present embodiment is not particularly limited, and examples thereof include diethylene glycol monobutyl ether, ethylene glycol monobutyl ether, diethylene glycol diethyl ether, diethylene glycol dibutyl ether, ethylene glycol mono2-ethylhexyl ether, 2,2,4-trimethyl-1,3-butanediol isobutyrate, diisopropyl glutarate, propylene glycol n-butyl ether, dipropylene glycol n-butyl ether, tripropylene glycol n-butyl ether, dipropylene glycol methyl ether and tripropylene glycol methyl ether. The film-forming aid can be used for plasticizing an aqueous resin dispersion having a high Tg to enhance the adhesiveness to inorganic materials.

The antifreezing agent in the present embodiment is not particularly limited, and examples thereof include propylene glycol and ethylene glycol.

In the aqueous resin dispersion for mortar according to the present embodiment, the average particle diameter of the aqueous resin dispersion is not particularly limited, and is preferably 30 nm or larger and 500 nm or smaller. The average particle diameter of the aqueous resin dispersion can be measured by using a method described in Examples below.

The solid content of the aqueous resin dispersion for mortar according to the present embodiment is not particularly limited, and is preferably 30% by mass or more and 65% by mass or less.

The aqueous resin dispersion for mortar according to the present embodiment can be employed as a sulfuric acid resistance modifier for cement. That is, the sulfuric acid resistance modifier for cement according to the present embodiment contains the aqueous resin dispersion for mortar according to the present embodiment. By mixing the aqueous resin dispersion for mortar according to the present embodiment with cement, the sulfuric acid resistance of the cement can be improved while the mechanical properties thereof are enhanced.

The composition according to the present embodiment contains the above-described aqueous resin dispersion for mortar according to the present embodiment and cement. The composition according to the present embodiment can be suitably used as a cement composition and can exhibit excellent sulfuric acid resistance and adhesiveness.

The composition according to the present embodiment can further contain a filler and an additive. In this case, the composition according to the present embodiment can be suitably used as a mortar composition and can exhibit excellent sulfuric acid resistance and adhesiveness.

The cement used for the cement composition and the mortar composition according to the present embodiment is not particularly limited, and examples thereof which can be used include ordinary Portland cement, high-early-strength Portland cement, ultra-high-early-strength Portland cement, moderate-heat Portland cement, sulfate-resistant Portland cement, blast-furnace cement, silica cement and fly-ash cement, which are defined in JIS R5210 (Portland cement), R5211 (Portland blast-furnace slag cement), R5212 (Portland pozzolan cement) and R5213 (Portland fly-ash cement). In addition, various cements described in "Semento no joshiki (English title: INTRODUCTION TO CEMENT & CONCRETE)" (Japan Cement Association, published in March 1994) such as special cement, white Portland cement, a cement-based solidification material, alumina cement, rapid-hardening cement, colloid cement, oil-well cement, geothermal-well cement, expansive cement and other special cement can be also used. The cement in the present embodiment preferably contains sulfate-resistant Portland cement or alumina cement, and more preferably contains alumina cement from the viewpoint of obtaining a higher sulfuric acid resistance.

The filler used for the mortar composition according to the present embodiment is not particularly limited, and examples thereof which can be used include sand, silica sand, white limestone sand and natural and artificial lightweight aggregates, which are commonly used for cement mortar. In addition, an inorganic or organic pigment or the like can be used. Examples of the above inorganic pigment include oxides, hydroxides, sulfides, carbonates, sulfates and silicic acid compounds of various metals such as magnesium, calcium, zinc, barium, titanium, aluminum, antimony and lead. Specific examples thereof include calcium carbonate, kaolin, talc, titanium dioxide, aluminum hydroxide, silica, gypsum, a barite powder, alumina white and satin white. Examples of the organic pigment include a fine powder of a solid polymer such as polystyrene, polyethylene and polyvinyl chloride.

The additive used for the mortar composition according to the present embodiment is not particularly limited, and examples thereof include a water-reducing agent and a fluidizing agent (such as polycarboxylic acid-based, melamine sulfonic acid-based, naphthalene sulfonic acid-based and lignin sulfonic acid-based ones), a shrinkage-reducing agent (such as glycol ether-based and polyether-based ones), an anti-cold agent (such as calcium chloride and silicates), a waterproofing agent (such as stearic acid and silicone-based ones), a rust inhibitor (such as phosphates and nitrites), a viscosity modifier (such as methyl cellulose, hydroxyethyl cellulose and polyvinyl alcohol), a setting modifier (such as phosphates), and an expansive agent (such as ettringite-based and lime-based ones), a colorant (such as iron oxide and chromium oxide), an antifoaming agent (such as silicone-based and mineral oil-based ones), a reinforcing material (such as a steel fiber, a glass fiber and a synthetic fiber), a surfactant (such as anionic, nonionic and cationic ones), a thickener, a leveling agent, a film-forming aid, a solvent, a plasticizer, a dispersant, a water resistance imparting agent and a lubricant.

The hardened product according to the present embodiment can be obtained by hardening the above-described composition according to the present embodiment. Due to this configuration, the hardened product according to the present embodiment can exhibit excellent sulfuric acid resistance and adhesiveness. That is, the method for producing the hardened product according to the present embodiment includes a step of hardening the composition according to the present embodiment. Typically, the hardened product according to the present embodiment can be a mortar hardened product obtained by hardening the mortar composition according to the present embodiment, and the mortar hardened product can exhibit excellent sulfuric acid resistance and adhesiveness. That is, the method for producing the mortar hardened product according to the present embodiment includes a step of hardening the mortar composition according to the present embodiment. The means for hardening in the present embodiment is not particularly limited; for example, the mortar composition may be charged in a mold such as a wood mold. Likewise, the curing conditions are not particularly limited, and examples of the curing include a curing at room temperature, a curing under heating, a curing in steam, a curing in water and a curing in combination thereof.

The method for modifying the sulfuric acid resistance of cement according to the present embodiment includes a step of allowing an aqueous resin dispersion containing a polymer (A) obtained by polymerizing 0.1% by mass or more and 5.0% by mass or less of an alkoxysilane group-containing polymerizable monomer (a), 0.5% by mass or more and 3.0% by mass or less of a carboxylic acid group-containing polymerizable monomer (b) and an other polymerizable monomer (c) to be copolymerized with the component (a) and the component (b), the polymer (A) having a calculated glass transition temperature of -20°C or higher and 20°C or lower, and a nonionic surfactant; and a cement, to coexist. Due to this configuration, the method for modifying the sulfuric acid resistance of cement according to the present embodiment can provide excellent sulfuric acid resistance and adhesiveness simultaneously. Further, the method for modifying the sulfuric acid resistance of cement according to the present embodiment can also be suitably applied to mortar. That is, the method for modifying the sulfuric acid resistance of mortar according to the present embodiment can provide excellent sulfuric acid resistance and adhesiveness simultaneously. Although the aspect of the above step of allowing to coexist is not particularly limited, a step of mixing is preferred.

## Examples

Next, the present embodiment will be described with reference to Examples and Comparative Examples, but the present embodiment is not limited to these examples in any way. It is to be noted that "part" and "%" in Examples and Comparative Examples are based on mass unless otherwise stated.

[Testing method]

<Average particle diameter>

A volume average particle diameter measured for an aqueous resin dispersion for mortar by using a laser diffraction particle size analyzer (a micro track particle size analyzer "UPA150" manufactured by Leeds and Northrup) was defined as an average particle diameter of the aqueous resin dispersion for mortar.

<Solid fraction>

In an aluminum pan was accurately weighed 1 g of an aqueous resin dispersion for mortar, dried in a thermostatic dryer at 105°C for 3 hours, left to stand for cooling in a desiccator containing a silica gel for 30 minutes, and thereafter precisely weighed. The mass after drying was divided by the mass before drying, and the resultant fraction was defined as the solid fraction (%).

<Formulation of mortar using ordinary cement (P/C = 10%)>

After adding 250.0 parts by mass of an ordinary cement (ordinary Portland cement manufactured by TAIHEIYO CEMENT CORPORATION), 250.0 parts by mass of a No. 6 silica sand, 55.6 parts by mass of an aqueous resin dispersion with a solid fraction of 45.0% by mass prepared in one of the following Examples, and an appropriate amount of water, the flow value (in accordance with JIS R5201, 11. (Flow test)) was adjusted to 170 ± 5 mm by hand kneading. Here, P/C, P and C denote a polymer/cement ratio, the solid content of an aqueous resin dispersion and the mass of cement, respectively. In the present Examples, since P = 25.02 and C = 250.0, P/C = 25.02/250.0 = 10% was obtained.

<Sulfuric acid resistance of mortar using ordinary cement>

The method for making a test object was in accordance with JIS A1132:2006. The test object had a cylindrical shape with a diameter of 7.5 cm and a height of 15 cm, and the number of test objects was three. The test object was removed from a mold 1 day after molding, and water-cured in tap water with a temperature of 20 ± 2°C to a material age of 28 days.

The test object was soaked in a 5% aqueous solution of sulfuric acid for 28 days. The test solution was totally replaced every 7 days. After the completion of the soaking, the whole surface of the test object removed from the aqueous solution of sulfuric acid was equally washed for 1 minute under the water pressure of tap water released from a full-opened tap. Thereafter, the water on the surface was wiped out, and a mass measurement was immediately performed to calculate the mass change rate by using the following formula. The mass measurement for the initial value had been performed after water curing. The standard amount of the aqueous solution of sulfuric acid was set to 4.4 L per test object.

$$\text{mass change rate (\%)} = 100 \times (\text{measured value of mass after soaking (g)} - \text{initial value (g)}) / \text{initial value (g)}$$

<Formulation of mortar using alumina cement (P/C = 10%)>

After adding 200.0 parts by mass of an alumina cement (Asahi Fondu manufactured by AGC Ceramics Co., Ltd.), 50.0 parts by mass of a blast-furnace slag (Esment manufactured by NIPPON STEEL & SUMIKIN BLAST FURNACE SLAG CEMENT CO., LTD), 250.0 parts by mass of a No. 6 silica sand, 55.6 parts by mass of an aqueous resin dispersion with a solid fraction of 45.0% by mass prepared in one of the following Examples and an appropriate amount of water, the flow value (in accordance with JIS R5201, 11. (Flow test)) was adjusted to 170 ± 5 mm by hand kneading. Here, P/C, P and C denote a polymer/cement ratio, the solid content of an aqueous resin dispersion and the mass of cement, respectively. In the present Examples, since P = 25.02 and C = 250.0 (alumina cement + blast-furnace slag = 200.0 + 50.0), P/C = 25.02/250.0 = 10% was obtained.

<Sulfuric acid resistance of mortar using alumina cement>

The method for making a test object was in accordance with JIS A1132:2006. The test object had a cylindrical shape with a diameter of 7.5 cm and a height of 15 cm, and the number of test objects was three. The test object was removed from a mold 1 day after molding, and water-cured in tap water with a temperature of 20 ± 2°C to a material age of 28 days.

The test object was soaked in a 5% aqueous solution of sulfuric acid for 112 days. The test solution was totally replaced every 7 days. After the completion of the soaking, the whole surface of the test object removed from the aqueous solution of sulfuric acid was equally washed for 1 minute under the water pressure of tap water released from a full-opened tap. Thereafter, the water on the surface was wiped out, and a mass measurement was immediately performed to calculate the mass change rate by using the following formula. The mass measurement for the initial value had been performed after water curing. The standard amount of the aqueous solution of sulfuric acid was set to 4.4 L per test object.

$$\text{mass change rate (\%)} = 100 \times \text{(measured value of mass after soaking (g) - initial value (g)) / initial value (g)}$$

<Permeation depth of sulfuric acid into mortar using alumina cement>

The test object after being subjected to the sulfuric acid-resistance test was cut into half with a diamond cutter or the like and a 1% phenolphthalein solution was sprayed on the cut surface. The length in the diameter direction of a red-colored part of the test object was measured with a caliper for five lines to calculate the average value thereof, which was subtracted from the initial width value of the test object (75 mm) and the resultant was multiplied by 1/2. This value was determined for each of the three test objects to calculate the average value, which was defined as the permeation depth of sulfuric acid.

<Adhesion strength>

In order to remove a fragile layer, a stain and an adhered matter from the surface of an ordinary flat plate with a nominal size of 300 (dimension: 300 × 300 × 60 mm) defined in JIS A5371:2004 Appendix 2, polishing was performed using an abrasive disc defined in JIS R6255:2006. After polishing, the resultant was cured at 20°C at 65%RH for 7 days, and thereafter the above mortar was applied thereon in an application thickness of 10 mm. After the resultant was cured at 20°C at 65%RH to a material age of 28 days, the adhesiveness was measured.

In evaluation of adhesiveness, a steel tensile jig (having an adhesion surface with 40 × 40 mm) was adhered to the test surface using an epoxy resin-based adhesive (Bond Quick Set manufactured by Konishi Co., Ltd.) in such a way as to rub softly, and fixed with a pressure-sensitive adhesive tape or the like so as not to move until the adhesive was hardened.

After the adhesive was hardened, cutting was performed with an electric cutter along the periphery of the steel tensile jig to the depth of the concrete. An adhesion strength tester in the style of Building Research Institute, Ministry of Construction (LPT-1500 manufactured by OXJACK co., ltd.) was attached to the steel tensile jig, and a tensile force was applied while maintaining a constant velocity to determine the maximum tensile load. The adhesion strength was calculated by using the following formula, which was rounded off to the first decimal place and the resultant was shown. The number of tests per position was set to three.

$$\text{adhesion strength (N/mm}^2\text{)} = \text{maximum tensile load (N) / 1600 (mm}^2\text{)}$$

<Calculated glass transition temperature>

The calculated glass transition temperature (in Table 1, denoted as "Calculated Tg") was calculated by using the following formula on the basis of the glass transition temperature of a homopolymer of a monomer and the copolymerization rate of a monomer.

$$1/Tg = W1/Tg1 + W2/Tg2 + \ldots$$

(Tg: a calculated glass transition temperature (K) of a copolymer composed of monomers 1, 2...; W1, W2...: respective mass fractions of monomer 1, monomer 2... in the copolymer (W1 + W2 +... = 1); Tg1, Tg2...: respective glass transition temperatures (K) of a homopolymer of monomer 1, monomer 2...)

In the above, the following values were employed for the glass transition temperature of a homopolymer. polystyrene (373K), polymethyl methacrylate (373K), poly2-ethylhexyl acrylate (218K), polymethacrylic acid (417K).

<Polymerization stability>

Regarding the polymerization stability, the presence/absence of an aggregate was checked by means of visual observation, and the case where no aggregate was observed was determined to be good.

<Aqueous resin dispersion 1>

To a reaction vessel equipped with a stirrer, a reflux condenser, a dropping tank and a thermometer, 477.3 parts by mass of water and 7.7 parts by mass of "LATEMUL E-118B" (sodium polyoxyethylene alkyl ether sulfate manufactured by Kao Corporation) were charged, and the temperature in the reaction vessel was raised to 80°C, to which 15 parts by mass of a 2% aqueous solution of ammonium persulfate was added. After 5 minutes, an emulsion mixture solution of 495.0 parts by mass of methyl methacrylate, 490.0 parts by mass of 2-ethylhexyl acrylate, 10.0 parts by mass of methacrylic acid, 5.0 parts by mass of γ-methacryloxypropyltrimethoxysilane, 38.5 parts by mass of "LATEMUL E-118B", 200.0 parts by mass of a 20% aqueous solution of "EMULGEN 150" (polyoxyethylene lauryl ether manufactured by Kao Corporation), 100.0 parts by mass of a 2% aqueous solution of ammonium persulfate and 350.0 parts by mass of water was poured into the reaction vessel over 240 minutes. The temperature of the reaction vessel was maintained at 80°C during the pouring. After the completion of the pouring, the temperature of the reaction vessel was maintained at 80°C for 60 minutes, followed by cooling, and the pH was adjusted to pH 8.0 with a 15% by mass aqueous solution of sodium hydroxide, and thereafter the solid fraction was adjusted to 45.0% by mass with 10.0 parts by mass of "SN-DEFOAMER 381" (an antifoaming agent manufactured by SAN NOPCO LIMITED) and water. The average particle diameter of the obtained aqueous resin dispersion for mortar was 131 nm. No aggregate was generated, and the polymerization stability was good.

<Aqueous resin dispersion 2>

To a reaction vessel equipped with a stirrer, a reflux condenser, a dropping tank and a thermometer, 477.3 parts by mass of water and 7.7 parts by mass of "LATEMUL E-118B" (sodium polyoxyethylene alkyl ether sulfate manufactured by Kao Corporation) were charged, and the temperature in the reaction vessel was raised to 80°C, to which 15 parts by mass of a 2% aqueous solution of ammonium persulfate was added. After 5 minutes, an emulsion mixture solution of 380.0 parts by mass of styrene, 175.0 parts by mass of methyl methacrylate, 430.0 parts by mass of 2-ethylhexyl acrylate, 10.0 parts by mass of methacrylic acid, 5.0 parts by mass of γ-methacryloxypropyltrimethoxysilane, 38.5 parts by mass of "LATEMUL E-118B", 200.0 parts by mass of a 20% aqueous solution of "EMULGEN 150" (polyoxyethylene lauryl ether manufactured by Kao Corporation), 100.0 parts by mass of a 2% aqueous solution of ammonium persulfate and 350.0 parts by mass of water was poured into the reaction vessel over 240 minutes. The temperature of the reaction vessel was maintained at 80°C during the pouring. After the completion of the pouring, the temperature of the reaction vessel was maintained at 80°C for 60 minutes, followed by cooling, and the pH was adjusted to pH 8.0 with a 15% by mass aqueous solution of sodium hydroxide, and thereafter the solid fraction was adjusted to 45.0% by mass with 10.0 parts by mass of "SN-DEFOAMER 381" (an antifoaming agent manufactured by SAN NOPCO LIMITED) and water. The average particle diameter of the obtained aqueous resin dispersion for mortar was 130 nm. No aggregate was generated, and the polymerization stability was good.

<Aqueous resin dispersion 3>

To a reaction vessel equipped with a stirrer, a reflux condenser, a dropping tank and a thermometer, 477.3 parts by mass of water and 7.7 parts by mass of "LATEMUL E-118B" (sodium polyoxyethylene alkyl ether sulfate manufactured by Kao Corporation) were charged, and the temperature in the reaction vessel was raised to 80°C, to which 15 parts by mass of a 2% aqueous solution of ammonium persulfate was added. After 5 minutes, an emulsion mixture solution of 425.0 parts by mass of methyl methacrylate, 560.0 parts by mass of 2-ethylhexyl acrylate, 10.0 parts by mass of methacrylic acid, 5.0 parts by mass of γ-methacryloxypropyltrimethoxysilane, 38.5 parts by mass of "LATEMUL E-118B", 200.0 parts by mass of a 20% aqueous solution of "EMULGEN 150" (polyoxyethylene lauryl ether manufactured by Kao Corporation), 100.0 parts by mass of a 2% aqueous solution of ammonium persulfate and 350.0 parts by mass of water was poured into the reaction vessel over 240 minutes. The temperature of the reaction vessel was maintained at 80°C during the pouring. After the completion of the pouring, the temperature of the reaction vessel was maintained at 80°C for 60 minutes, followed by cooling, and the pH was adjusted to pH 8.0 with a 15% by mass aqueous solution of sodium hydroxide, and thereafter the solid fraction was adjusted to 45.0% by mass with 10.0 parts by mass of "SN-DEFOAMER 381" (an antifoaming agent manufactured by SAN NOPCO LIMITED) and water. The average particle diameter of the obtained aqueous resin dispersion for mortar was 129 nm. No aggregate was generated, and the polymerization stability was good.

<Aqueous resin dispersion 4>

To a reaction vessel equipped with a stirrer, a reflux condenser, a dropping tank and a thermometer, 477.3 parts by mass of water and 7.7 parts by mass of "LATEMUL E-118B" (sodium polyoxyethylene alkyl ether sulfate

manufactured by Kao Corporation) were charged, and the temperature in the reaction vessel was raised to 80°C, to which 15 parts by mass of a 2% aqueous solution of ammonium persulfate was added. After 5 minutes, an emulsion mixture solution of 495.0 parts by mass of methyl methacrylate, 490.0 parts by mass of 2-ethylhexyl acrylate, 10.0 parts by mass of methacrylic acid, 5.0 parts by mass of γ-methacryloxypropyltrimethoxysilane, 10.0 parts by mass of methyltrimethoxysilane, 10.0 parts by mass of dimethyldimethoxysilane, 38.5 parts by mass of "LATEMUL E-118B", 200.0 parts by mass of a 20% aqueous solution of "EMULGEN 150" (polyoxyethylene lauryl ether manufactured by Kao Corporation), 100.0 parts by mass of a 2% aqueous solution of ammonium persulfate and 350.0 parts by mass of water was poured into the reaction vessel over 240 minutes. The temperature of the reaction vessel was maintained at 80°C during the pouring. After the completion of the pouring, the temperature of the reaction vessel was maintained at 80°C for 60 minutes, followed by cooling, and the pH was adjusted to pH 8.0 with a 15% by mass aqueous solution of sodium hydroxide, and thereafter the solid fraction was adjusted to 45.0% by mass with 10.0 parts by mass of "SN-DEFOAMER 381" (an antifoaming agent manufactured by SAN NOPCO LIMITED) and water. The average particle diameter of the obtained aqueous resin dispersion for mortar was 133 nm. No aggregate was generated, and the polymerization stability was good.

<Aqueous resin dispersion 5>

To a reaction vessel equipped with a stirrer, a reflux condenser, a dropping tank and a thermometer, 477.3 parts by mass of water and 7.7 parts by mass of "LATEMUL E-118B" (sodium polyoxyethylene alkyl ether sulfate manufactured by Kao Corporation) were charged, and the temperature in the reaction vessel was raised to 80°C, to which 15 parts by mass of a 2% aqueous solution of ammonium persulfate was added. After 5 minutes, an emulsion mixture solution of 495.0 parts by mass of methyl methacrylate, 490.0 parts by mass of 2-ethylhexyl acrylate, 10.0 parts by mass of methacrylic acid, 5.0 parts by mass of γ-methacryloxypropyltrimethoxysilane, 10.0 parts by mass of methyltrimethoxysilane, 10.0 parts by mass of dimethyldimethoxysilane, 38.5 parts by mass of "LATEMUL E-118B", 200.0 parts by mass of a 20% aqueous solution of "EMULGEN 150" (polyoxyethylene lauryl ether manufactured by Kao Corporation), 100.0 parts by mass of a 2% aqueous solution of ammonium persulfate and 480.0 parts by mass of water was poured into the reaction vessel over 240 minutes. The temperature of the reaction vessel was maintained at 80°C during the pouring. After the completion of the pouring, the temperature of the reaction vessel was maintained at 80°C for 60 minutes, followed by cooling, and the pH was adjusted to pH 8.0 with a 25% by mass aqueous solution of ammonium hydroxide, and thereafter the solid fraction was adjusted to 45.0% by mass with 10.0 parts by mass of "SN-DEFOAMER 381" (an antifoaming agent manufactured by SAN NOPCO LIMITED) and water. The average particle diameter of the obtained aqueous resin dispersion for mortar was 131 nm. No aggregate was generated, and the polymerization stability was good.

<Aqueous resin dispersion 6>

To a reaction vessel equipped with a stirrer, a reflux condenser, a dropping tank and a thermometer, 477.3 parts by mass of water and 7.7 parts by mass of "LATEMUL E-118B" (sodium polyoxyethylene alkyl ether sulfate manufactured by Kao Corporation) were charged, and the temperature in the reaction vessel was raised to 80°C, to which 15 parts by mass of a 2% aqueous solution of ammonium persulfate was added. After 5 minutes, an emulsion mixture solution of 490.0 parts by mass of methyl methacrylate, 490.0 parts by mass of 2-ethylhexyl acrylate, 10.0 parts by mass of methacrylic acid, 10.0 parts by mass of γ-methacryloxypropylmethyltrimethoxysilane, 38.5 parts by mass of "LATEMUL E-118B", 200.0 parts by mass of a 20% aqueous solution of "EMULGEN 150" (polyoxyethylene lauryl ether manufactured by Kao Corporation), 100.0 parts by mass of a 2% aqueous solution of ammonium persulfate and 350.0 parts by mass of water was poured into the reaction vessel over 240 minutes. The temperature of the reaction vessel was maintained at 80°C during the pouring. After the completion of the pouring, the temperature of the reaction vessel was maintained at 80°C for 60 minutes, followed by cooling, and the pH was adjusted to pH 8.0 with a 15% by mass aqueous solution of sodium hydroxide, and thereafter the solid fraction was adjusted to 45.0% by mass with 10.0 parts by mass of "SN-DEFOAMER 381" (an antifoaming agent manufactured by SAN NOPCO LIMITED) and water. The average particle diameter of the obtained aqueous resin dispersion for mortar was 132 nm. No aggregate was generated, and the polymerization stability was good.

<Aqueous resin dispersion 7>

To a reaction vessel equipped with a stirrer, a reflux condenser, a dropping tank and a thermometer, 477.3 parts by mass of water and 7.7 parts by mass of "LATEMUL E-118B" (sodium polyoxyethylene alkyl ether sulfate manufactured by Kao Corporation) were charged, and the temperature in the reaction vessel was raised to 80°C, to which 15 parts by mass of a 2% aqueous solution of ammonium persulfate was added. After 5 minutes, an emulsion

mixture solution of 500.0 parts by mass of methyl methacrylate, 490.0 parts by mass of 2-ethylhexyl acrylate, 10.0 parts by mass of methacrylic acid, 38.5 parts by mass of "LATEMUL E-118B", 200.0 parts by mass of a 20% aqueous solution of "EMULGEN 150" (polyoxyethylene lauryl ether manufactured by Kao Corporation), 100.0 parts by mass of a 2% aqueous solution of ammonium persulfate and 350.0 parts by mass of water was poured into the reaction vessel over 240 minutes. The temperature of the reaction vessel was maintained at 80°C during the pouring. After the completion of the pouring, the temperature of the reaction vessel was maintained at 80°C for 60 minutes, followed by cooling, and the pH was adjusted to pH 8.0 with a 15% by mass aqueous solution of sodium hydroxide, and thereafter the solid fraction was adjusted to 45.0% by mass with 10.0 parts by mass of "SN-DEFOAMER 381" (an antifoaming agent manufactured by SAN NOPCO LIMITED) and water. The average particle diameter of the obtained aqueous resin dispersion for mortar was 132 nm. No aggregate was generated, and the polymerization stability was good.

<Aqueous resin dispersion 8>

To a reaction vessel equipped with a stirrer, a reflux condenser, a dropping tank and a thermometer, 477.3 parts by mass of water and 7.7 parts by mass of "LATEMUL E-118B" (sodium polyoxyethylene alkyl ether sulfate manufactured by Kao Corporation) were charged, and the temperature in the reaction vessel was raised to 80°C, to which 15 parts by mass of a 2% aqueous solution of ammonium persulfate was added. After 5 minutes, an emulsion mixture solution of 380.0 parts by mass of styrene, 180.0 parts by mass of methyl methacrylate, 430.0 parts by mass of 2-ethylhexyl acrylate, 10.0 parts by mass of methacrylic acid, 38.5 parts by mass of "LATEMUL E-118B", 200.0 parts by mass of a 20% aqueous solution of "EMULGEN 150" (polyoxyethylene lauryl ether manufactured by Kao Corporation), 100.0 parts by mass of a 2% aqueous solution of ammonium persulfate and 350.0 parts by mass of water was poured into the reaction vessel over 240 minutes. The temperature of the reaction vessel was maintained at 80°C during the pouring. After the completion of the pouring, the temperature of the reaction vessel was maintained at 80°C for 60 minutes, followed by cooling, and the pH was adjusted to pH 8.0 with a 15% by mass aqueous solution of sodium hydroxide, and thereafter the solid fraction was adjusted to 45.0% by mass with 10.0 parts by mass of "SN-DEFOAMER 381" (an antifoaming agent manufactured by SAN NOPCO LIMITED) and water. The average particle diameter of the obtained aqueous resin dispersion for mortar was 129 nm. No aggregate was generated, and the polymerization stability was good.

<Aqueous resin dispersion 9>

To a reaction vessel equipped with a stirrer, a reflux condenser, a dropping tank and a thermometer, 477.3 parts by mass of water and 7.7 parts by mass of "LATEMUL E-118B" (sodium polyoxyethylene alkyl ether sulfate manufactured by Kao Corporation) were charged, and the temperature in the reaction vessel was raised to 80°C, to which 15 parts by mass of a 2% aqueous solution of ammonium persulfate was added. After 5 minutes, an emulsion mixture solution of 650.0 parts by mass of methyl methacrylate, 335.0 parts by mass of 2-ethylhexyl acrylate, 15.0 parts by mass of methacrylic acid, 38.5 parts by mass of "LATEMUL E-118B", 200.0 parts by mass of a 20% aqueous solution of "EMULGEN 150" (polyoxyethylene lauryl ether manufactured by Kao Corporation), 100.0 parts by mass of a 2% aqueous solution of ammonium persulfate and 350.0 parts by mass of water was poured into the reaction vessel over 240 minutes. The temperature of the reaction vessel was maintained at 80°C during the pouring. After the completion of the pouring, the temperature of the reaction vessel was maintained at 80°C for 60 minutes, followed by cooling, and the pH was adjusted to pH 8.0 with a 15% by mass aqueous solution of sodium hydroxide, and thereafter the solid fraction was adjusted to 45.0% by mass with 10.0 parts by mass of "SN-DEFOAMER 381" (an antifoaming agent manufactured by SAN NOPCO LIMITED) and water. The average particle diameter of the obtained aqueous resin dispersion for mortar was 132 nm. No aggregate was generated, and the polymerization stability was good.

<Aqueous resin dispersion 10>

To a reaction vessel equipped with a stirrer, a reflux condenser, a dropping tank and a thermometer, 477.3 parts by mass of water and 7.7 parts by mass of "LATEMUL E-118B" (sodium polyoxyethylene alkyl ether sulfate manufactured by Kao Corporation) were charged, and the temperature in the reaction vessel was raised to 80°C, to which 15 parts by mass of a 2% aqueous solution of ammonium persulfate was added. After 5 minutes, an emulsion mixture solution of 495.0 parts by mass of methyl methacrylate, 490.0 parts by mass of 2-ethylhexyl acrylate, 10.0 parts by mass of methacrylic acid, 10.0 parts by mass of methyltrimethoxysilane, 10.0 parts by mass of dimethyldimethoxysilane, 38.5 parts by mass of "LATEMUL E-118B", 200.0 parts by mass of a 20% aqueous solution of "EMULGEN 150" (polyoxyethylene lauryl ether manufactured by Kao Corporation), 100.0 parts by mass of a 2% aqueous solution of ammonium persulfate and 350.0 parts by mass of water was poured into the reaction vessel over 240 minutes. The temperature of the reaction vessel was maintained at 80°C during the pouring. After the completion of the pouring, the

temperature of the reaction vessel was maintained at 80°C for 60 minutes, followed by cooling, and the pH was adjusted to pH 8.0 with a 15% by mass aqueous solution of sodium hydroxide, and thereafter the solid fraction was adjusted to 45.0% by mass with 10.0 parts by mass of "SN-DEFOAMER 381" (an antifoaming agent manufactured by SAN NOPCO LIMITED) and water. The average particle diameter of the obtained aqueous resin dispersion for mortar was 133 nm. No aggregate was generated, and the polymerization stability was good.

<Example 1> (for reference)

The physical properties of a mortar using aqueous resin dispersion 1 in the above formulation were evaluated in accordance with the above tests. The result is shown in Table 1.

<Example 2> (for reference)

The physical properties of a mortar using aqueous resin dispersion 2 in the above formulation were evaluated in accordance with the above tests. The result is shown in Table 1.

<Example 3> (for reference)

The physical properties of a mortar using aqueous resin dispersion 3 in the above formulation were evaluated in accordance with the above tests. The result is shown in Table 1.

<Example 4>

The physical properties of a mortar using aqueous resin dispersion 4 in the above formulation were evaluated in accordance with the above tests. The result is shown in Table 1.

<Example 5>

The physical properties of a mortar using aqueous resin dispersion 5 in the above formulation were evaluated in accordance with the above tests. The result is shown in Table 1.

<Example 6> (for reference)

The physical properties of a mortar using aqueous resin dispersion 6 in the above formulation were evaluated in accordance with the above tests. The result is shown in Table 1.

<Comparative Example 1>

The physical properties of a mortar using aqueous resin dispersion 7 in the above formulation were evaluated in accordance with the above tests. The result is shown in Table 1.

<Comparative Example 2>

The physical properties of a mortar using aqueous resin dispersion 8 in the above formulation were evaluated in accordance with the above tests. The result is shown in Table 1.

<Comparative Example 3>

The physical properties of a mortar using aqueous resin dispersion 9 in the above formulation were evaluated in accordance with the above tests. The result is shown in Table 1.

<Comparative Example 4>

The physical properties of a mortar using aqueous resin dispersion 10 in the above formulation were evaluated in accordance with the above tests. The result is shown in Table 1.

<Comparative Example 5>

The physical properties of a mortar using a mixture in which 0.25 parts by mass of γ-methacryloxypropylmethyldimethoxysilane was added to 55.6 parts by mass of aqueous resin dispersion 7 in the above formulation were evaluated in accordance with the above tests. The result is shown in Table 1.

The evaluation results of Examples 1 to 6 and Comparative Examples 1 to 5 are shown in Table 1. Here, "phm (per hundred monomer)" means parts by mass in the case that the total amount of a monomer is defined as 100 parts by mass.

[Table 1]

| Classification | | Example 1** | Example 2** | Example 3** | Example 4 | Example 5 | Example 6** | Comparative Example 1 | Comparative Example 2 | Comparative Example 3 | Comparative Example 4 | Comparative Example 5 |
|---|---|---|---|---|---|---|---|---|---|---|---|---|
| | | Aqueous resin dispersion 1 | Aqueous resin dispersion 2 | Aqueous resin dispersion 3 | Aqueous resin dispersion 4 | Aqueous resin dispersion 5 | Aqueous resin dispersion 6 | Aqueous resin dispersion 7 | Aqueous resin dispersion 8 | Aqueous resin dispersion 9 | Aqueous resin dispersion 10 | Aqueous resin dispersion 7 |
| Monomer composition (%) | styrene (St) | 0 | 38.0 | 0 | 0 | 0 | 0 | 0 | 38.0 | 0 | 0 | 0 |
| | methyl methacrylate (MMA) | 49.5 | 17.5 | 42.5 | 49.5 | 49.5 | 49.0 | 50.0 | 18.0 | 65.0 | 50.0 | 50.0 |
| | 2-ethylhexyl acrylate (2-EHA) | 49.0 | 43.0 | 56.0 | 49.0 | 49.0 | 49.0 | 49.0 | 43.0 | 33.5 | 49.0 | 49.0 |
| | methacrylic acid (MAA) | 1.0 | 1.0 | 1.0 | 1.0 | 1.0 | 1.0 | 1.0 | 1.0 | 1.5 | 1.0 | 1.0 |
| | γ-methacryloxypropyltrimethoxysilane | 0.5 | 0.5 | 0.5 | 0.5 | 0.5 | 0 | 0 | 0 | 0 | 0 | 0 |
| | γ-methacryloxypropylmethydimethoxysilane | 0 | 0 | 0 | 0 | 0 | 1.0 | 0 | 0 | 0 | 0 | 0 |
| Nonionic surfactant (phm*) | | 4.0 | 4.0 | 4.0 | 4.0 | 4.0 | 4.0 | 4.0 | 4.0 | 4.0 | 4.0 | 4.0 |
| Si-containing compound (phm*) | methyltrimethoxysilane | 0 | 0 | 0 | 1.0 | 1.0 | 0 | 0 | 0 | 0 | 1.0 | 0 |
| | dimethyldimethoxysilane | 0 | 0 | 0 | 1.0 | 1.0 | 0 | 0 | 0 | 0 | 1.0 | 0 |
| Neutralizing agent | | NaOH | NaOH | NaOH | NaOH | NH4OH | NaOH | NaOH | NaOH | NaOH | NaOH | NaOH |
| Polymerization stability | | good | good | good | good | good | good | good | good | good | good | good |
| Calculated Tg (°C) | | 5 | 13 | -5 | 5 | 5 | 5 | 5 | 13 | 30 | 5 | 5 |
| Particle diameter (nm) | | 131 | 130 | 129 | 133 | 131 | 132 | 132 | 129 | 132 | 133 | 132 |
| pH | | 8.0 | 8.0 | 8.0 | 8.0 | 8.0 | 8.0 | 8.0 | 8.0 | 8.0 | 8.0 | 8.0 |
| Solid fraction (%) | | 45.0 | 45.0 | 45.0 | 45.0 | 45.0 | 45.0 | 45.0 | 45.0 | 45.0 | 45.0 | 45.0 |
| Post-addition | γ-methacryloxypropylmethyldimethoxysilane | - | - | - | - | - | - | - | - | - | - | amount corresponding to 1.0% by mass based on solid content |

(continued)

| Classification | | Example 1** | Example 2** | Example 3** | Example 4 | Example 5 | Example 6** | Comparative Example 1 | Comparative Example 2 | Comparative Example 3 | Comparative Example 4 | Comparative Example 5 |
|---|---|---|---|---|---|---|---|---|---|---|---|---|
| | | Aqueous resin dispersion 1 | Aqueous resin dispersion 2 | Aqueous resin dispersion 3 | Aqueous resin dispersion 4 | Aqueous resin dispersion 5 | Aqueous resin dispersion 6 | Aqueous resin dispersion 7 | Aqueous resin dispersion 8 | Aqueous resin dispersion 9 | Aqueous resin dispersion 10 | Aqueous resin dispersion 7 |
| Ordinary cement | Acid resistance, mass change rate (%) 28 days after soaking in 5% sulfuric acid | -28.1 | -29.2 | -27.6 | -25.2 | -25.2 | -27.2 | -38.8 | -39.2 | -45.2 | 42.2 | -40.1 |
| | Adhesion strength ($N/mm^2$) | 2.4 | 2.2 | 2.4 | 2.8 | 2.8 | 2.5 | 2.2 | 2.0 | 0.9 | 2.3 | 2.2 |
| Alumina cement | Acid resistance, mass change rate (%) 112 days after soaking in 5% sulfuric acid | -4.8 | -5.1 | -4.9 | -4.2 | -4.2 | -4.5 | -20.3 | -22.5 | -30.2 | -28.9 | -21.2 |
| | Permeation depth of sulfuric acid 112 days after soaking in 5% sulfuric acid (mm) | 5.1 | 5.0 | 4.9 | 4.8 | 4.8 | 5.0 | 6.4 | 6.5 | 7.9 | 7.2 | 6.5 |
| | Adhesion strength ($N/mm^2$) | 2.2 | 2.3 | 2.4 | 2.5 | 2.5 | 2.2 | 1.9 | 1.8 | 0.2 | 2.0 | 1.9 |

*) phm: per hundred monomer (the amount relative to 100 of a monomer)
** for reference

Industrial Applicability

The aqueous resin dispersion for mortar according to the present invention can be suitably utilized for applications such as a sulfuric acid-resistant cement, a sulfuric acid-resistant mortar and a sulfuric acid-resistant concrete.

## Claims

1. An aqueous resin dispersion for mortar, comprising:

   a polymer (A) obtained by polymerizing 0.1% by mass or more and 5.0% by mass or less of an alkoxysilane group-containing polymerizable monomer (a), 0.5% by mass or more and 3.0% by mass or less of a carboxylic acid group-containing polymerizable monomer (b) and an other polymerizable monomer (c) to be copolymerized with the component (a) and the component (b), the polymer (A) having a calculated glass transition temperature of -20°C or higher and 20°C or lower; and
   a nonionic surfactant,
   **characterized in that**
   the component (A) is a polymer modified with a compound represented by the following formula (1):

   $$(R^1)_n\text{-Si-}(R^2)_{(4-n)} \qquad (1)$$

   wherein n is an integer of 0 or more and 3 or less; $R^1$ represents hydrogen, an alkyl group having 1 or more and 16 or less carbon atoms, an aryl group having 6 or more and 10 or less carbon atoms or a cycloalkyl group having 5 or more and 6 or less carbon atoms; a number n of $R^1$ may be the same or different; $R^2$ represents an alkoxy group having 1 or more and 8 or less carbon atoms, an acetoxy group or a hydroxy group; and a number (4 - n) of $R^2$ may be the same or different.

2. The aqueous resin dispersion for mortar according to claim 1, wherein in the formula (1), n is an integer of 1 or more and 3 or less.

3. A use of the aqueous resin dispersion for mortar according to claim 1 or 2 for modifying the sulfuric acid resistance of cement.

4. A composition comprising the aqueous resin dispersion for mortar according to claim 1 or 2 and a cement.

5. The composition according to claim 4, further comprising a filler and an additive.

6. The composition according to claim 4 or 5, wherein the cement is an alumina cement.

7. A method for producing a hardened product, comprising hardening the composition according to any one of claims 4 to 6.

8. A hardened product obtained by hardening the composition according to any one of claims 4 to 6.

9. A method for modifying sulfuric acid resistance of cement, the method comprising mixing with a cement an aqueous resin dispersion according to claim 1.

## Patentansprüche

1. Wässrige Harzdispersion für Mörtel, umfassend:

   ein Polymer (A), erhalten durch Polymerisieren von 0,1 Massen-% oder mehr und 5,0 Massen-% oder weniger eines Alkoxysilangruppe(n) enthaltenden polymerisierbaren Monomers (a), 0,5 Massen-% oder mehr und 3,0 Massen-% oder weniger eines Carbonsäuregruppe(n) enthaltenden polymerisierbaren Monomers (b) und eines anderen polymerisierbaren Monomers (c), das mit der Komponente (a) und der Komponente (b) copolymerisiert werden soll, wobei das Polymer (A) eine berechnete Glasübergangstemperatur von -20°C oder mehr und 20°C oder weniger aufweist; und

ein nichtionisches Tensid,
**dadurch gekennzeichnet, dass**
die Komponente (A) ein Polymer ist, das mit einer Verbindung der folgenden Formel (1) modifiziert ist:

$$(R^1)_n-Si-(R^2)_{(4-n)} \quad (1)$$

wobei n eine ganze Zahl von 0 oder mehr und 3 oder weniger ist; $R^1$ Wasserstoff, eine Alkylgruppe mit 1 oder mehr und 16 oder weniger Kohlenstoffatomen, eine Arylgruppe mit 6 oder mehr und 10 oder weniger Kohlenstoffatomen oder eine Cycloalkylgruppe mit 5 oder mehr und 6 oder weniger Kohlenstoffatomen darstellt; die Anzahl n des $R^1$ gleich oder verschieden sein kann; $R^2$ eine Alkoxygruppe mit 1 oder mehr und 8 oder weniger Kohlenstoffatomen, eine Acetoxygruppe oder eine Hydroxygruppe darstellt; und die Anzahl (4 - n) des $R^2$ gleich oder verschieden sein kann.

2. Wässrige Harzdispersion für Mörtel nach Anspruch 1, wobei in der Formel (1) n eine ganze Zahl von 1 oder mehr und 3 oder weniger ist.

3. Verwendung der wässrigen Harzdispersion für Mörtel nach Anspruch 1 oder 2 zum Modifizieren der Schwefelsäurebeständigkeit von Zement.

4. Zusammensetzung, welche die wässrige Harzdispersion für Mörtel nach Anspruch 1 oder 2 und einen Zement umfasst.

5. Zusammensetzung nach Anspruch 4, welche weiterhin einen Füllstoff und ein Additiv umfasst.

6. Zusammensetzung nach Anspruch 4 oder 5, wobei der Zement ein Aluminiumoxid-Zement ist.

7. Verfahren zur Herstellung eines gehärteten Produkts, umfassend das Härten der Zusammensetzung nach einem der Ansprüche 4 bis 6.

8. Gehärtetes Produkt, erhalten durch Härten der Zusammensetzung nach einem der Ansprüche 4 bis 6.

9. Verfahren zum Modifizieren der Schwefelsäurebeständigkeit von Zement, wobei das Verfahren das Mischen einer wässrige Harzdispersion nach Anspruch 1 mit einem Zement umfasst.

## Revendications

1. Dispersion de résine aqueuse pour mortier, comprenant :

un polymère (A) obtenu par polymérisation de 0,1 % en masse ou plus et 5,0 % en masse ou moins d'un monomère polymérisable contenant un groupe alkoxysilane (a), 0,5 % en masse ou plus et 3,0 % en masse ou moins d'un monomère polymérisable contenant un groupe acide carboxylique (b) et d'un autre monomère polymérisable (c) devant être copolymérisé avec le constituant (a) et le constituant (b), le polymère (A) ayant une température de transition vitreuse calculée de -20 °C ou supérieure et 20 °C ou inférieure ; et
un tensio-actif non ionique,
**caractérisée en ce que**
le constituant (A) est un polymère modifié par un composé représenté par la formule (1) suivante :

$$(R^1)_n-Si-(R^2)_{(4-n)} \quad (1)$$

dans laquelle n est un nombre entier de 0 ou plus et de 3 ou moins ; $R^1$ représente un hydrogène, un groupe alkyle comportant 1 ou plus et 16 ou moins atomes de carbone, un groupe aryle comportant 6 ou plus et 10 ou moins atomes de carbone ou un groupe cycloalkyle comportant 5 ou plus et 6 ou moins atomes de carbone ; un nombre n de $R^1$ peuvent être identiques les uns aux autres ou différents les uns des autres ; $R^2$ représente un groupe alkoxy comportant 1 ou plus et 8 ou moins atomes de carbone, un groupe acétoxy ou un groupe

hydroxy ; et un nombre (4 - n) de $R^2$ peuvent être identiques les uns aux autres ou différents les uns des autres.

**2.** Dispersion de résine aqueuse pour mortier selon la revendication 1, dans laquelle dans la formule (1), n est un nombre entier de 1 ou plus et 3 ou moins.

**3.** Utilisation de la dispersion de résine aqueuse pour mortier selon la revendication 1 ou 2 pour modifier la résistance à l'acide sulfurique d'un ciment.

**4.** Composition comprenant la dispersion de résine aqueuse pour mortier selon la revendication 1 ou 2 et un ciment.

**5.** Composition selon la revendication 4, comprenant en outre une charge et un additif.

**6.** Composition selon la revendication 4 ou 5, dans laquelle le ciment est un ciment d'alumine.

**7.** Procédé de production d'un produit durci, comprenant le durcissement de la composition selon l'une quelconque des revendications 4 à 6.

**8.** Produit durci obtenu par durcissement de la composition selon l'une quelconque des revendications 4 à 6.

**9.** Procédé pour modifier la résistance à l'acide sulfurique d'un ciment, le procédé comprenant le mélange avec un ciment d'une dispersion de résine aqueuse selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 8091900 A
- JP 2008174641 A
- JP 2007204333 A
- JP 3279244 A
- JP 2000336232 A
- EP 0565987 A2


### Non-patent literature cited in the description


- Semento no joshiki (English title: INTRODUCTION TO CEMENT & CONCRETE). Japan Cement Association, March 1994